# EUROPEAN PATENT SPECIFICATION

(11) **EP 0 908 101 B1**
(45) Date of publication and mention of the grant of the patent: **17.10.2001**
(21) Application number: 98500036.3
(22) Date of filing: 09.02.1998
(51) Int. Cl.: A21D 13/00, A21D 8/00, A23L 1/176, A23L 1/164

(54) **Procedure for the preparation of a granulated bread product**
Verfahren zur Herstellung von körnigem Brotprodukt
Procédé de préparation de granules de pain

(30) Priority: 11.08.1997 ES 9701782
(43) Date of publication of application: 14.04.1999
(73) Proprietor: Plazaola Irizar, Antonio, 20700 Zumarraga (Guipuzcoa) (ES)
(72) Inventor: Plazaola Irizar, Antonio, 20700 Zumarraga (Guipuzcoa) (ES)
(74) Representative: Flaccus, Rolf-Dieter, Dr.

(56) References cited:
- EP-A- 0 030 578
- US-A- 4 622 225
- PATENT ABSTRACTS OF JAPAN vol. 1996, no. 05, 31 May 1996 (1996-05-31) & JP 08 000204 A (HYOGO PANKO KK;OTHERS: 01), 9 January 1996 (1996-01-09)
- PATENT ABSTRACTS OF JAPAN vol. 1996, no. 11, 29 November 1996 (1996-11-29) & JP 08 182472 A (ASAHI CHEM IND CO LTD), 16 July 1996 (1996-07-16)

## Description

The present invention refers to a procedure for the preparation of a granulated food product.

As regards the process of its manufacture, this product, which will be described at a further point herein, is marketed in the form of a granulate varying in granule size and is distinguished by the ease of its preparation for serving by end consumers, as it solely requires that milk be added.

### PRIOR STATE OF THE ART

Numerous preparations in powder or granulated form of very different compositions are known, but which always require that a certain number of procedures be performed for the purpose of readying them for serving or, at least, to make them appetizing for consumers to enjoy. Therefore, in some cases, they must be dissolved, heated, stirred or put through other types of physical procedures. As can be readily understood, this means on obligation for consumers, who, in addition to having to perform these procedures, require a certain length of time to do so.

Patent Abstracts of Japan, vol. 1996, No.11, 29 Nov. 1996 & JP 08 182 472 A (ASAHI CHEM IND CO LTD), 16 July 1996 discloses the preparation of bread crumbs having crispy texture with delayed moisture absorption.

The granulated food product the preparation of which comprises the object of the present patent is simple in composition, and the process for making the same is comprised of a number of equally simple operations, with the advantage that its final preparation by end consumers prior to serving is as easy as merely adding milk in the desired proportion.

### DETAILED DESCRIPTION OF THE INVENTION

The ingredients employed for the preparation of this new product are as follows:

Water, sugar, defatted powdered cacao, ground cinnamon, dextrose, cornstarch, wheat flour, soy lecithin, yeast and salt, with added flavoring.

A brief description of the procedure in question can be provided by listing the different procedures through which the ingredients must be processed,:
1. Mixing and kneading all the ingredients into a smooth, pliable dough.
2. Dividing the dough into portions equal in weight, i.e. 500 grams each.
3. Rolling the portions of dough into balls to restore the structure of the gluten.
4. Placing the balls of dough in a controlled-atmosphere fermentation chamber: temperature 30ºC, humidity 75% and time 90 minutes.
- 5. Cooking the balls of dough in an oven at a temperature of 250ºC for 40 minutes.
6. Allowing the balls of dough to rest for slow cooling to room temperature.
7. Dividing the product into pieces for quicker drying.
8. Drying by applying a current of air heated to 280ºC to the product divided into pieces up to the point of reducing the moisture content to a maximum value of 8%.
9. Cooling of the product to 50ºC.
10. Grinding of the product into granules and sifting of granules to achieve a uniform granule size.

### EXAMPLE OF PREFERRED PREPARATION

In following, an explanation is provided of a preferred case of the preparation of the product of the present patent, for which the qualitative and quantitative composition is stated.

| | |
|---|---|
| Water | 450 grams |
| Wheat flour | 600 grams |
| Powdered cacao | 100 grams |
| Sugar | 200 grams |
| Cornstarch | 50 grams |
| Dextrose | 45 grams |
| Soy lecithin | 5 grams |
| Salt | 20 grams |
| Ground cinnamon | 1 gram |
| Yeast | 30 grams |
| Flavoring | 1 gram |

## Claims

1. Procedure for the preparation of a granulated food product for use of a quick final preparation by solely adding milk for serving this product, **characterized by** including the sequenced process of performing the following steps:
a. Mixing and kneading of all the ingredients into a smooth, pliable dough.
b. Dividing the dough into portions equal in weight.
c. Rolling the portions of dough into balls to restore the structure of the gluten.
d. Placing the balls of dough in a controlled-atmosphere fermentation chamber: temperature 30ºC, humidity 75% and time 90 minutes.
e. Cooking the balls of dough in an oven at a temperature of 250º for 40 minutes.
f. Allowing the balls of dough to rest for slow cooling to room temperature.
g. Dividing the product into pieces for faster drying.
h. Drying by applying a current of air heated to 280ºC to the product divided into pieces up to the point of reducing the moisture content to a maximum value of 8%.
i. Cooling of the product to 50ºC.
j. Grinding of the product into granules and sifting of granules to achieve a uniform granule size.

2. Procedure for the preparation of a granulated food product according to Claim 1, **characterized in that** the steps of the process are carried out with the following ingredients in the following amounts per g for a granulated product of 1000 grams:
| | |
|---|---|
| Wheat flour | 600 grams |
| Powdered cacao | 100 grams |
| Sugar | 200 grams |
| Cornstarch | 50 grams |
| Dextrose | 45 grams |
| Soy lecithin | 5 grams |
| Salt | 20 grams |
| Ground cinnamon | 1 gram |
| Yeast | 30 grams |
with the incorporation of 450 grams of water and the addition of a flavoring.

## Patentansprüche

1. Verfahren zur Herstellung eines körnigen Lebensmittelprodukts zur Verwendung als eine schnelle, fertige Zubereitung, nur durch Zugabe von Milch, zum Servieren dieses Produktes, **gekennzeichnet durch** die Abfolge folgendender Schritte:
a. Mischen und Kneten aller Zutaten zu einem glatten, geschmeidigen Teig,
b. Teilen des Teigs in Portionen mit gleichem Gewicht,
c. Rollen der Teigportionen zu Bällen, um die Struktur des Glutens wieder herzustellen,
d. Plazieren der Teigbälle in eine Fermentationskammer mit geregelter Atmosphäre: Temperatur 30 °C, Luftfeuchtigkeit 75% und Zeit 90 Minuten,
e. Backen der Teigbälle in einem Ofen bei einer Temperatur von 250° für 40 Minuten,
f. Ruhenlassen der Teigbälle, um sie langsam auf Raumtemperatur abzukühlen,
g. Teilen des Produkts in Stücke zum schnelleren Trocknen,
h. Trocknen **durch** Anwenden eines Luftstroms, der auf 280°C erwärmt ist, auf das in Stücke geteilte Produkt, bis zu einer Reduktion des Feuchtigkeitsgehalts auf einen Maximalwert von 8%,
i. Abkühlen des Produkts auf 50°C,
j. Mahlen des Produkts zu Körnern und Sieben der Körner, um eine einheitliche Körnergröße zu erreichen.

2. Verfahren zur Herstellung eines körnigen Lebensmittelprodukts nach Anspruch 1, **dadurch gekennzeichnet, daß** die Schritte des Verfahrens mit den folgenden Zutaten in den folgenden Mengen je g für ein körniges Produkt von 1000 Gramm durchgeführt werden:
| | |
|---|---|
| Weizenmehl | 600 Gramm |
| Kakao-Pulver | 100 Gramm |
| Zucker | 200 Gramm |
| Maisstärke | 50 Gramm |
| Dextrose | 45 Gramm |
| Soja-Lecithin | 5 Gramm |
| Salz | 20 Gramm |
| Gemahlener Zimt | 1 Gramm |
| Hefe | 30 Gramm |
unter Zugabe von 450 Gramm Wasser und eines Gewürzes.

## Revendications

1. Procédure de préparation d'un produit alimentaire granulé devant être utilisé pour une préparation rapide finale en ajoutant seulement du lait pour servir ce produit, **caractérisée en ce qu'**elle comprend le procédé, en séquence, d'exécution des étapes suivantes consistant à:
a. mélanger et pétrir tous les ingrédients en une pâte lisse et souple
b. diviser la pâte en portions de même poids
c. rouler les portions de pâte en boules afin de restaurer la structure du gluten
d. placer les boules de pâte dans une chambre de fermentation à atmosphère contrôlée: une température de 30°C, une humidité à 75% et pendant une durée de 90 minutes
e. cuire les boules de pâte dans un four à une température de 250°C pendant 40 minutes
f. faire reposer les boules de pâte de façon à les laisser refroidir lentement à la température ambiante
g. diviser le produit en morceaux, pour un séchage plus rapide
h. sécher en appliquant un courant d'air chauffé à 280°C au produit divisé en morceaux jusqu'au point de réduction de la teneur en humidité à une valeur maximale de 8%
i. refroidir le produit à 50°C
j. broyer le produit en granules et tamiser les granules afin d'obtenir une taille de granule uniforme.

2. Procédure de préparation d'un produit alimentaire granulé selon la revendication 1, **caractérisée en ce que** les étapes du procédé sont mises en oeuvre avec les ingrédients suivants, selon les quantités, en grammes, suivantes, pour un produit granulé de 1000 grammes:
| | |
|---|---|
| Farine de blé | 600 grammes |
| Chocolat en poudre | 100 grammes |
| Sucre | 200 grammes |
| Amidon de maïs | 50 grammes |
| Dextrose | 45 grammes |
| Lécithine de soja | 5 grammes |
| Sel | 20 grammes |
| Cannelle broyée | 1 gramme |
| Levure | 30 grammes |
avec l'incorporation de 450 grammes d'eau et l'ajout d'un aromatisant.
